## Europäisches Patentamt
## European Patent Office
## Office européen des brevets

(19)

(11) Veröffentlichungsnummer: **0 015 874**
**B1**

(12) **EUROPÄISCHE PATENTSCHRIFT**

(45) Veröffentlichungstag der Patentschrift:
**27.01.82**

(51) Int. Cl.³: **G 01 M 3/26**

(21) Anmeldenummer: **80810069.7**

(22) Anmeldetag: **25.02.80**

(54) **Verfahren zur Leckratenbestimmung.**

(30) Priorität: **01.03.79 CH 2038/79**

(43) Veröffentlichungstag der Anmeldung:
**17.09.80 Patentblatt 80/19**

(45) Bekanntmachung des Hinweises auf die Patenterteilung:
**27.01.82 Patentblatt 82/4**

(84) Benannte Vertragsstaaten:
**AT DE GB SE**

(56) Entgegenhaltungen:
**DE-A-2 240 752**
**DE-A-2 422 561**
**FR-A-1 399 512**
**US-A-3 518 873**
**US-A-4 103 537**

(73) Patentinhaber: **GRETAG Aktiengesellschaft,
Althardstrasse 70, CH-8105 Regensdorf (CH)**

(72) Erfinder: **Roth, Philippe, Alte Landstrasse 28,
CH-8114 Dänikon (CH)**

(74) Vertreter: **Pirner, Wilhelm et al, Patentabteilung der
CIBA-GEIGY AG Postfach, CH-4002 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Leckratenbestimmung

Die Erfindung betrifft ein Verfahren zur Bestimmung der Leckrate eines Flüssigkeitsbehältnisses, insbesondere einer Leitung, wobei das mit Flüssigkeit gefüllte Behältnis abgeschlossen und unter Druck gesetzt wird.

Zur Untersuchung von Flüssigkeitsleitungen, z. B. Ölleitungen für Gebäudeheizungen etc., auf Lecks wurde bisher praktisch ausschließlich so vorgegangen, daß diese Leitungen abgeschlossen und unter Überdruck gesetzt und der Druckabfall über ein längeres Zeitintervall gemessen wurde. Dabei konnte die Leitung sowohl mit Flüssigkeit als auch mit Druckluft gefüllt sein. Diese Meßmethode hat jedoch in beiden Fällen wesentliche Nachteile. So ist zum Beispiel für eine genaue Messung ein relativ hoher Druck und/oder eine relativ lange Meßzeit erforderlich. Weiters setzen schon geringe Anteile des jeweils anderen Mediums in der Leitung (Lufteinschlüsse bei Ölfüllung oder Ölreste bei Luftfüllung) die Meßgenauigkeit wesentlich, u. U. sogar bis zur Unbrauchbarkeit herab. Schließlich können unkontrollierbare Temperaturschwankungen Leckverluste vortäuschen oder kompensieren und setzen damit der Meßgenauigkeit prinzipielle Grenzen.

Aus der DE-A-2 240 752 ist ein Verfahren zur Feststellung von Undichtigkeitsstellen für Erdöl-Leitungen bekannt. Bei diesem Verfahren werden die dem zu überwachenden Leitungsabschnitt zufließenden und die von diesem abfließenden Flüssigkeitsmengen bei zwei verschiedenen Drücken gemessen und die Unterschiede der Differenzen zwischen den zu- und abfließenden Volumina bei den beiden Drücken als Maß für die Leckrate ausgewertet. Dieses bekannte Verfahren ist zwar weniger temperaturabhängig, aber grundsätzlich nur für in Betrieb befindliche Leitungssysteme geeignet. Außerdem erfordert es Eingriffe in das bzw. Vorkehrungen im Leitungssystem, indem für die Erzeugung der beiden unterschiedlichen Drücke im betreffenden Leitungsabschnitt diverse Drosseln, Ventile etc. vorgesehen sein müssen.

Aufgabe der Erfindung ist ein für nicht in Betrieb stehende Leitungssysteme geeignetes Verfahren der eingangs definierten Art derart zu verbessern, daß es zu genaueren und/oder sicheren Meßergebnissen führt. Erfindungsgemäß wird dies durch die im Patentanspruch 1 angeführten Maßnahmen erreicht.

Aus der US-A-3 518 873 ist ein Verfahren zur Festigkeitsprüfung von Rohrleitungen bekannt, bei dem die Rohrleitung mit einem Reservoir verbunden ist und über dieses Reservoir abwechselnd mit höheren und niedrigerem Druck beaufschlagt wird. Über die Auswertung selbst ist in dieser Druckschrift nichts ausgesagt. Außerdem dient dieses bekannte Verfahren nicht zur Bestimmung von Leckraten, sondern zur Prüfung der mechanischen Festigkeit einer Rohrleitung.

Im folgenden wird die Erfindung anhand der Zeichnung näher erläutert. Es zeigt

Fig. 1 eine nach dem Verfahren arbeitende Meßanordnung,

Fig. 2 ein für das Verfahren typisches Strömungs-Zeit-Diagramm und

Fig. 3 ein Blockschema einer Auswertevorrichtung.

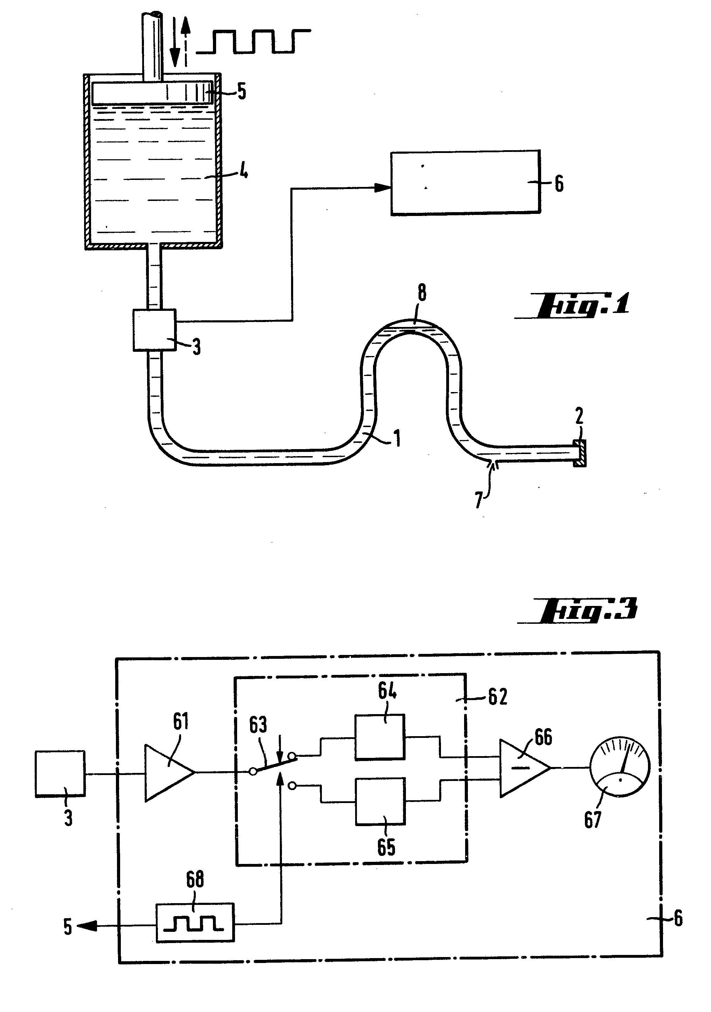

Gemäß Fig. 1 ist die auf Lecks zu überprüfende Leitung 1 an einem Ende mit einem Verschluß 2 abgeschlossen. Ihr anderes Ende ist über ein Strömungsmeßgerät 3 an ein Vorratsgefäß 4 für die betreffende Flüssigkeit, im Falle einer Ölleitung also für Öl, verbunden. Das Gefäß steht mit einer in der Zeichnung durch einen Kolben 5 symbolisierten Druckerzeugungsvorrichtung in Verbindung, welche die Flüssigkeit und damit die gesamte Leutung mit Druck (Über- und/oder Unterdruck) beaufschlagen kann. Die Vorrichtung ist dabei so ausgelegt, daß sie rechteckförmige Druckimpulse erzeugen kann, wobei der niedrigere der beiden Druckwerte auch Null sein bzw. unter Atmosphärendruck liegen kann, so daß die Flüssigkeit in der Leitung dann nur unter dem hydrostatischen Druck bzw. unter Unterdruck steht.

Der Strömungsmesser 3, der vorzugsweise thermisch arbeitet und mit einer Überbrückung versehen ist, die erst ab einem vorgegebenen Minimaldifferenzdruck oder einer vorgegebenen Minimalströmungsgeschwindigkeit wirksam wird (z. B. gemäß DE-A-28 47 171.8), ist an eine Auswertevorrichtung 6 angeschlossen, die aus den gemessenen Strömungsgeschwindigkeiten die Leckrate ermittelt und anzeigt.

Ferner sind in Fig. 1 in der Leitung 1 ein Leck 7 und ein Lufteinschluß 8 angedeutet.

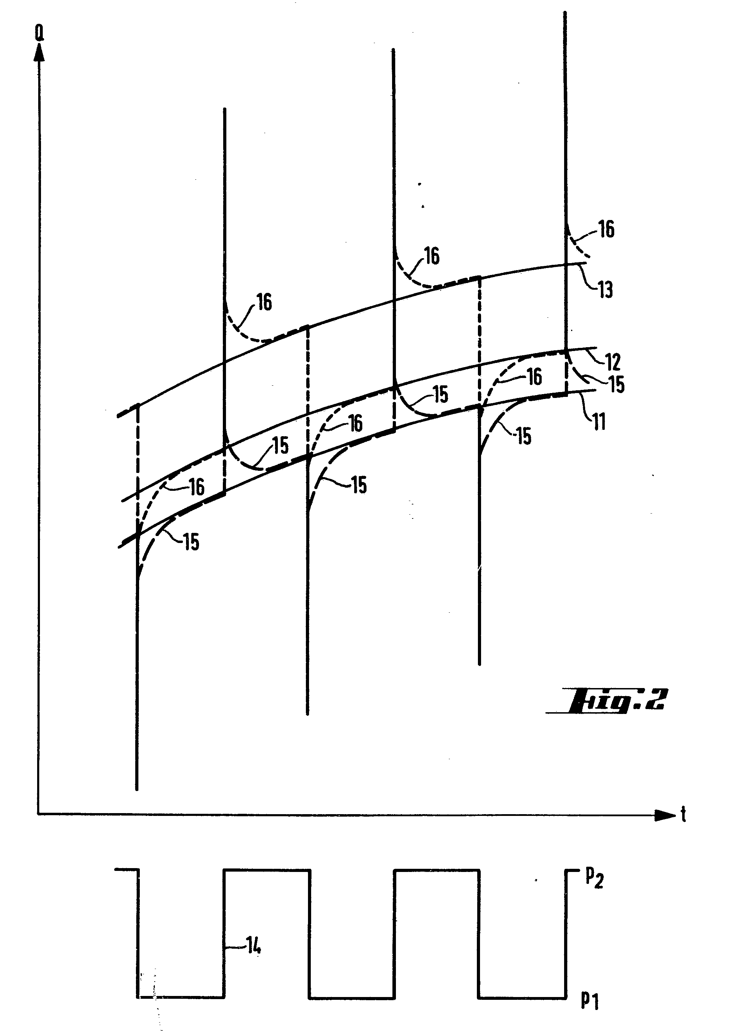

Fig. 2 zeigt für das erfindungsgemäße Verfahren charakteristische Strömungsverläufe. Auf der Ordinate ist die Strömungsgeschwindigkeit, auf der Abszisse die Zeit aufgetragen.

Ohne Leck und bei konstantem Druck können sich Strömungen nur aufgrund von Temperaturschwankungen ergeben. Diese Strömungen sind dann im wesentlichen proportional dem Temperaturgradienten. Die Linie 11 in Fig. 2 zeigt einen solchen Strömungsverlauf für einen willkürlich angenommenen Temperaturverlauf beim konstanten Druck $p_1$.

Im Falle eines Lecks, bei sonst aber gleichen Verhältnissen, wird die Strömung gleich verlaufen wie ohne Leck, jedoch entsprechend dem Über- oder Unterdruck und der Größe des Lecks zu höheren bzw. tieferen Werten hin verschoben sein. Die Linien 12 und 13 zeigen die Strömungsverläufe mit einem Leck in der Leitung beim Druck $p_1$ und einem höheren Druck $p_2$.

Bei spontan wechselnder Druckbelastung $p_1$-$p_2$-$p_1$-$p_2$ usw., wie sie durch die Vorrichtung 5 erzeugt wird und in Fig. 2 durch die Linie 14 angedeutet ist, überlagern sich dem normalen Strömungsverlauf während des Druckwechsels mehr oder weniger rasch abklingende Strömungsspitzen. Die Abklingdauer dieser Spitzen hängt vor allem von der Elastizität der Leitung, der Menge der Lufteinschlüsse und von adiabatischen Effekten der Lufteinschlüsse ab. Die (länger)strichliert dargestellte Linie 15 in Fig. 2 zeigt einen solchen Strömungsverlauf bei der erfindungsgemäßen Rechteck-Druckbelastung der Leitung ohne Leck in der Leitung. Wie man sieht, geht der Strömungsverlauf jeweils nach dem Abklingen der positiven und negativen Spitzen in denjenigen bei konstantem Druck ($p_1$/Linie 11) über.

Die (kürzer)strichliert dargestellte Linie 16 repräsentiert den Strömungsverlauf bei Vorhandensein eines Lecks. Hier geht die Linie nach dem Abklingen der positiven Spitzen nicht in dieselbe Linie über wie nach dem Abklingen der negativen Spitzen, sondern im ersteren Falle in die Linie 13 des höheren Drucks $p_2$ und im letzteren Falle in die Linie 12 des tieferen Drucks $p_1$. Der Abstand zwischen diesen beiden, in Realität natürlich nur gedachten Kurven ist somit bei bekannten Drucken $p_1$ und $p_2$ ein Maß für die Größe der Leckrate.

In Fig. 3 ist ein Blockschema der Auswertevorrichtung 6 dargestellt. Die Vorrichtung umfaßt einen auf den Strömungsmesser 3 abgestimmten Meßverstärker 61, eine einen Schalter 63 und zwei Speicher 64 und 65 enthaltende Sample-and-Hold-Schaltung 62, einen Differenzverstärker 66, ein Anzeigeinstrument 67 und einen Taktgeber 68. Der Meßverstärker 61 könnte natürlich auch integrierender Bestandteil des Strömungsmessers 3 sein und wäre dann in der Auswerteschaltung 6 nicht enthalten.

Die Ausgangssignale des Meßverstärkers 61 sind den vom Strömungsmesser 3 erfaßten Strömungsgeschwindigkeiten proportional und gelangen über den Schalter 63 abwechselnd zu den beiden Speichern 64 und 65. Der Schalter 63 wird dabei vom Taktgeber 68, der auch die Druckerzeugungsvorrichtung 5 ansteuert, so mit der letzteren synchronisiert, daß das Meßsignal jeweils nur unmittelbar vor dem Druckwechsel zum einen bzw. anderen Speicher gelangt. Nach zwei aufeinanderfolgenden Druckwechseln stehen dann in diesen Meßsignale entsprechend den Linien 13 bzw. 12 der Fig. 2. Die Inhalte der beiden Speicher 64 und 65 werden dann im Differenzverstärker voneinander subtrahiert und die Differenz vom Instrument 67 direkt als Leckrate zur Anzeige gebracht.

Wie schon weiter vorne erwähnt, kann der tiefere der beiden konstanten Drücke, mit denen die Flüssigkeit in der Leitung beaufschlagt wird, auch gleich dem hydrostatischen Druck oder sogar Unterdruck (unter 1 bar absolut) sein. Letzteres erlaubt z. B. durch Verschmutzungen etc. verstopfte Lecks zu öffnen und dadurch ebenfalls mit zu erfassen. Zweckmäßigerweise teilt man dabei die Leckratenbestimmung in zwei Phasen auf. Während der ersten, vorbereitenden Phase appliziert man abwechselnd Über- und Unterdruck, wobei man bereits erste eher qualitative Aussagen über das Vorhandensein von Lecks gewinnen kann. In der anschließenden zweiten und eigentlichen Meßphase wird dann nur Überdruck (verschiedener Höhe) appliziert und die quantitative Leckratenbestimmung wie vorstehend beschrieben durchgeführt.

Der Vorteil der erfindungsgemäßen Art der Leckratenbestimmung liegt vor allem darin, daß Temperaturschwankungen und Lufteinschlüsse nicht in das Meßergebnis eingehen. Außerdem sind auch nur relativ geringe Überdrücke notwendig und die erforderliche Meßzeit ist gegenüber den herkömmlichen Methoden relativ kurz.

In der Praxis arbeitet man beispielsweise mit Überdrücken bis etwa 12 bar. Die Differenz zwischen dem höheren Druck $p_2$ und dem geringeren Druck $p_1$ beträgt etwa 1 bis 10 bar. Der tiefere Druck $p_1$ kann auch gleich dem hydrostatischen Druck der Flüssigkeit oder darunter gewählt werden. Diese Werte hängen natürlich von Art und Zweck des zu prüfenden Behältnisses und von allfälligen Prüfvorschriften ab und können in weiten Grenzen variieren. Die Druckimpulse (Zeitabschnitte höheren Drucks $p_2$) können in Abständen von etwa 1 bis 5 Minuten aufeinanderfolgen. Die Zeitabschnitte höheren und tieferen Drucks sind mit Vorteil gleich lang. Die Gesamtmeßdauer kann sich beispielsweise etwa über 1 bis 10 Druckimpulsperioden erstrecken.

Es versteht sich, daß das erfindungsgemäße Verfahren nicht nur für Leitungen geeignet ist, sondern selbstverständlich auch für die Prüfung von anderen Behältnissen eingesetzt werden kann.

**Patentansprüche**

1. Verfahren zur Bestimmung der Leckrate eines Flüssigkeitsbehältnisses, insbesondere einer Leitung, wobei das mit Flüssigkeit abgefüllte Behältnis abgeschlossen und unter Druck gesetzt wird, dadurch gekennzeichnet, daß das Behältnis mit einem Flüssigkeitsreservoir verbunden wird, daß die Flüssigkeit im Reservoir und damit auch im Behältnis abwechselnd mit konstantem höheren und tieferen Druck beaufschlagt wird, daß die Flüssigkeitsströmungen zwischen Reservoir und Behältnis gemessen werden und daß als Maß für die Leckrate die Differenz der Strömungsgeschwindigkeiten zu zwei aufeinanderfolgenden Druckwechseln jeweils unmittelbar vorangehenden Zeitpunkten herangezogen wird.

2. Verfahren nach Anspruch 1, dadurch gekennzeichnet, daß der tiefere der beiden konstanten Drücke kleiner als 1 bar gewählt wird.

3. Verfahren nach einem der vorangehenden Ansprüche, dadurch gekennzeichnet, daß die Leckratenbestimmung in zwei Phasen durchgeführt wird, wobei die Flüssigkeit während der ersten, vorbereitenden Phase abwechselnd mit Überdruck und Unterdruck und während der zweiten und eigentlichen Meßphase abwechselnd mit Überdrücken verschiedener Größe beaufschlagt wird.

4. Verfahren nach einem der vorangehenden Ansprüche, dadurch gekennzeichnet, daß die Zeitabschnitte höheren bzw. tieferen Drucks sich periodisch in Abständen von etwa 1 – 5 Minuten wiederholen.

5. Verfahren nach einem der vorangehenden Ansprüche, dadurch gekennzeichnet, daß die Flüssigkeitsströmungen über eine Zeitspanne von etwa 1 – 10 Druckimpulsperioden erfaßt werden.

6. Verfahren nach einem der vorangehenden Ansprüche, dadurch gekennzeichnet, daß ein thermischer Strömungsmesser verwendet wird, der vorzugsweise mit einer Überbrückung versehen ist, welche ab einem vorgegebenen Mindestdurchfluß wirksam wird.

## Claims

1. A method of determining the leak rate of a fluid-containing receptacle, in particular a supply line, said fluid-containing receptacle being sealed off and subjected to pressure, which method comprises connecting said receptacle to a tank of fluid, subjecting alternately the fluid in the tank and, accordingly, also in the receptacle, to constant higher and lower pressure, measuring the rates of flow of fluid between tank and receptacle, and using as reference value for the leak rate the difference in the rates of flow at two intervals of time each immediately preceding successive changes of pressure.

2. A method according to claim 1, wherein the lower of the two constant pressures is less than 1.

3. A method according to either of the preceding claims, wherein the measurement of the leak rate is carried out in two phases, such that the fluid is alternately subjected to overpressure and underpressure during the first preparatory phase and to overpressure of different intensity during the second and actual measuring phase.

4. A method according to either of the preceding claims, wherein the intervals of time at which higher and lower pressure are applied, recur periodically every 1 to 5 minutes.

5. A method according to any one of the preceding claims, wherein the rates of flow are measured over a period of about 1 to 10 pressure pulse periods.

6. A method according to any one of the preceding claims, wherein there is used a thermal flow meter preferably provided with a bridging that becomes effective from a given minimum rate of flow

## Revendications

1. Procédé pour déterminer le taux de perte ou de fuite d'un récipient empli de liquide, notamment un conduit, selon lequel on isole le récipient empli de liquide et on le met sous pression, procédé caractérisé en ce que l'on relie le récipient à un réservoir de liquide; on fait alternativement agit sur le liquide du réservoir et donc aussi sur le liquide de récipient une pression constante plus forte et plus faible; on mesure les écoulements de liquide entre le réservoir et le récipient, et l'on considère comme mesure du taux de perte ou de fuite la différence des vitesses d'écoulement en deux instants précédant immédiatement des variations successives de la pression.

2. Procédé selon la revendication 1, caractérisé en ce que la plus faible des deux pressions constantes est choisie inférieure à 1 bar.

3. Procédé selon l'une des revendications précédentes, caractérisé en ce qu'on effectue la détermination du taux de fuite en deux phases, en soumettant le liquide, pendant la première phase de préparation alternativement à une surpression et à une dépression, et pendant la seconde phase, qui est la phase de mesure proprement dite, alternativement à des surpressions de grandeur différente.

4. Procédé selon l'une des revendications précédentes, caractérisé en ce que les écarts de temps, séparant les instants où agit une pression plus élevée ou une pression moins élevée, se répètent périodiquement à des intervalles d'environ 1 à 5 minutes.

5. Procédé selon l'une des revendications précédentes, caractérisé en ce qu'on détermine les écoulements du liquide sur un intervalle de temps d'environ 1à 10 périodes d'impulsions de pression.

6. Procédé selon l'une des revendications précédentes, caractérisé en ce qu'on utilise un appareil thermique de mesure d'écoulement, comportant avantageusement un dispositif de pontage qui devient actif à partir d'un écoulement minimal prédéterminé.

*Fig:1*

*Fig:3*

Fig.2